Europäisches Patentamt

European Patent Office

Office européen des brevets

(11) Veröffentlichungsnummer: **0 223 102 B1**

# (12) EUROPÄISCHE PATENTSCHRIFT

(45) Veröffentlichungstag der Patentschrift: **15.01.92**

(51) Int. Cl.$^5$: **H02P  5/172**

(21) Anmeldenummer: **86114761.9**

(22) Anmeldetag: **23.10.86**

(54) Steuerschaltung für einen elektrischen Druckmaschinenantriebsmotor oder dergleichen.

(30) Priorität: **22.11.85 DE 3541275**

(43) Veröffentlichungstag der Anmeldung:
**27.05.87 Patentblatt  87/22**

(45) Bekanntmachung des Hinweises auf die
Patenterteilung:
**15.01.92 Patentblatt  92/03**

(84) Benannte Vertragsstaaten:
**CH DE FR GB IT LI NL SE**

(56) Entgegenhaltungen:
**DE-A- 2 517 160
DE-A- 2 928 659
DE-A- 3 020 139
DE-B- 2 422 292
GB-A- 1 172 415**

**ASEA-ZEITSCHRIFT, Band 26, Heft 5-6, 1981,
Seiten 101-105; H. ERICSSON "Stromrichter
für Gleichstromantriebe"**

(73) Patentinhaber: **Heidelberger Druckmaschinen
Aktiengesellschaft
Kurfürsten-Anlage 52-60 Postfach 10 29 40
W-6900 Heidelberg 1(DE)**

(72) Erfinder: **Rodi, Anton
Karlsruher Strasse
W-6906 Leimen 3(DE)**
Erfinder: **Krüger, Michael
Zeisigweg 1
W-6803 Edingen-Neckarhausen(DE)**

(74) Vertreter: **Stoltenberg, Baldo Heinz-Herbert
c/o Heidelberger Druckmaschinen AG
Kurfürsten-Anlage 52-60
W-6900 Heidelberg 1(DE)**

**Beschreibung**

Die Erfindung betrifft eine Steuerschaltung für einen elektrischen Druckmaschinenantriebsmotor oder dergleichen, die ein erstes Halbleiter enthaltendes Leistungsstellglied für den Antrieb des Motors in einer ersten Momentenrichtung und ein zweites Halbleiter enthaltendes Leistungsstellglied für den Antrieb des Motors in der anderen Momentenrichtung enthält.

Derartige Steuerschaltungen sind beispielsweise aus der DE-OS 30 20 139 bekannt. Dort wird eine Umkehrstromrichterschaltung gezeigt, die sowohl einen Vorwärtsbetrieb wie auch einen Rückwärtsbetrieb erlaubt. Bei der gezeigten Trenneinrichtung 98 handelt es sich um eine Einrichtung zur Trennung des Zündimpulses. Eine elektrische Trennung des Leistungsstellgliedes als solches vom übrigen System, ist durch die Trenneinrichtung 98 jedoch nicht möglich. Ferner ist es bekannt, reine Einzelbauelemente, z. B. Leistungsthyristoren, welche mit Schraubbefestigungen bzw. Schraubanschlüssen versehen sind, im Reparaturfall zu ersetzen.

Unter Antrieb des Motors in der ersten Momentenrichtung wird verstanden, daß der Motor entweder in dieser Richtung läuft und dabei mechanische Leistung abgibt, oder daß der Motor in der anderen Richtung läuft, jedoch durch ein elektrisch erzeugtes, in der ersten Momentenrichtung wirkendes Drehmoment elektrisch gebremst wird. Analoges gilt für die zweite Momentenrichtung. Die bekannten Steuerschaltungen ermöglichen es, den Antriebsmotor und dadurch die gesamte Druckmaschine zumindest dann, wenn der Motor in der genannten ersten Richtung läuft, was hier der Einfachheit halber als Vorwärtsrichtung oder Vorwärtslauf bezeichnet werden soll, elektrisch zu bremsen.

Das elektrische Bremsen eines Motors kann in unterschiedlicher weise erfolgen, beispielsweise durch Widerstandsbremsung oder durch Nutzbremsung. Um Unbequemlichkeiten zu vermeiden, beispielsweise infolge des Platzbedarfes von Bremswiderständen und/oder durch Wärmeentwicklung an diesen beim Bremsvorgang begründet sind, wird häufig die Nutzbremsung bevorzugt, bei der der Motor während des Bremsens elektrische Energie an das Netz abgibt. Die Nutzbremsung wird auch bei der Erfindung bevorzugt, die Erfindung ist jedoch hierauf nicht beschränkt.

Beim heutigen Stand der Technik wird als Antriebsmotor für eine Druckmaschine hoher Qualität, insbesondere eine Offsetdruckmaschine, im allgemeinen ein Gleichstrommotor verwendet, der aus einem Wechselstromnetz (hierunter soll auch ein Netz mit mehrphasigem wechselstrom verstanden werden) gespeist wird. Auch das hier beschriebene Ausführungsbeispiels verwendet eine derartige Anordnung.

Wenn das beim Vorwärtslauf des Motors den Ankerstrom liefernde Leistungsstellglied infolge eines Schadens in einem der Halbleiter ausfällt, was auch bei Verwendung hochwertiger Halbleiter nicht völlig auszuschließen ist, so kann bei Verwendung der herkömmlichen Steuerschaltungen die Druckmaschine oder eine andere vom Antriebsmotor angetriebene Maschine nicht benutzt werden, bis der Schaden behoben ist. Der Rückwärtslauf des Antriebsmotors einer Druckmaschine wird im allgemeinen lediglich für Einstellarbeiten verwendet, die beispielsweise mit einem Druckplattenwechsel zusammenhängen. Wenn das für den Rückwärtslauf verwendete Leistungsstellglied infolge eines Halbleiterausfalles ausfällt, so ist normalerweise auch der Vorwärtsbetrieb nicht mehr möglich. Auch ist ein elektrisches Bremsen in diesem Fall nicht mehr möglich. Selbstverständlich kommt eine derartige Maschine nach dem Abschalten der Energiezufuhr zum Motor infolge des von der angetriebenen Druckmaschine ausgeübten Bremsmomentes auch ohne elektrisches Bremsen zum Stillstand.

Der Erfindung liegt die Aufgabe zugrunde, die Stillstandszeiten, die beim Ausfall eines Halbleiters auftreten, zu verkürzen. Diese Aufgabe wird gemäß der Erfindung dadurch gelöst, daß eine Trenneinrichtung vorgesehen ist, um mindestens bei Ausfall eines bestimmten Leistungsstellgliedes dieses von der übrigen Schaltung elektrisch abzutrennen und die übrige Schaltung statt dessen mit dem anderen Leistungsstellglid zu verbinden.

Das genannte bestimmte Leistungsstellglied soll im folgenden der Einfachheit halber als das für den Vorwärtslauf des Motors bestimmte Leistungsstellglied bezeichnet werden. Wenn dieses Stellglied ausfällt, wobei bei herkömmlichen Steuerschaltungen zuerst eine Reparatur erfolgen muß, bevor die Maschine wieder betrieben werden kann, wird gemäß der Erfindung das schadhafte Leistungsstellglied elektrisch abgetrennt und es wird an seine Stelle das andere Leistungsstellglied geschaltet, das nunmehr für den Vorwärtslauf der Maschine zur Verfügung steht. Die Maschine kann nun zwar nicht mehr elektrisch gebremst werden, kommt jedoch, wie oben erwähnt, beim Abschalten der Energiezufuhr auch ohne elektrisches Bremsen zum Stillstand.

Die Trenneinrichtung kann im einfachsten Fall in der Weise verwirklicht sein, daß die Steueranschlüsse und die Lastanschlüsse (Hochstromanschlüsse) der beiden Leistungsstellglieder mittels ausreichend langer flexibler Kabel oder starrer Stromschienen und mittels Schraub-Klemmverbindungen mit der übrigen Steuerschaltung, dem Netz und den elektrischen Leitungen, die zum Elektromotor führen, verbunden sind. Beim Ausfall des Leistungsstellgliedes für den Vorwärtslauf werden sämtliche Verbindungen zu und von den beiden Leistungsstellgliedern getrennt und es wird das funktionsfähige Leistungsstellglied anstatt des defekten Leistungsstellgliedes elektrisch angeschlossen.

Der Stillstand der Maschine kann daher selbst bei Verwendung von Schraub-Klemmverbindungen, also ohne schnell von Hand zu betätigende elektrische Schalter oder automatische Schalter, relativ kurzgehalten werden, und beträgt beispielsweise nur wenige Minuten. Nach dem Umschalten kann entweder das defekte Leistungsstellglied ausgebaut und an Ort und Stelle repariert werden, oder es wird zur Herstellerfirma zwecks Reparatur geschickt, oder es wird ein Austauschteil bestellt. Wegen der hohen Zuverlässigkeit von Halbleiterelementen wird mit hoher Wahrscheinlichkeit der soeben geschilderte Notbetrieb aufrechterhalten werden können, bis eine Reparatur möglich ist.

Fällt bei einer Steuerschaltung für eine Druckmaschine das zum elektrischen Bremsen benötigte Leistungsstellglied aus, das auch für den Rückwärtslauf benötigt wird, so wird nur dieses Leistungsstellglied elektrisch abgetrennt.

Ein Abtrennen mindestens der Hochstromleitungen ist zweckmäßig, weil bei einem defekten Halbleiter mit einem dauernden Kurzschluß gerechnet werden muß.

Damit das eine Leistungsstellglied ohne Schwierigkeiten anstelle des anderen verwendet werden kann, ist es vorteilhaft, wenn gemäß einer Ausführungsform der Erfindung die beiden Leistungsstellglieder im wesentlichen gleich ausgebildet sind.

Vorteilhaft ist es, wenn gemäß einer Ausführungsform der Erfindung jedes Leistungsstellglied als eine aus der Steuerschaltung leicht entfernbare Einheit ausgebildet ist. Es kann dann das defekte Leistungsstellglied aus der Steuerschaltung entfernt werden und die Steuerschaltung kann mit dem einzigen, noch funktionsfähigen Leistungsstellglied nach der oben beschriebenen Umschaltung weiterarbeiten. Das aus der Steuerschaltung entfernte Leistungsstellglied kann nun ohne Zeitnot an Ort und Stelle repariert oder zur Reparatur an den Hersteller eingeschickt werden.

Wie eingangs bereits erwähnt, sind die Leistungsstellglieder bei einer Ausführungsform der Erfindung steuerbare Stromrichter, und bei einer Ausführungsform der Erfindung enthält jedes Leistungsstellglied eine Wechselstrombrückenschaltung, insbesondere eine Brückenschaltung für dreiphasigen Wechselstrom.

Das Umschalten auf Notbetrieb bei Ausfall eines der Leistungsstellglieder kann besonders schnell erfolgen, wenn gemäß einer Ausführungsform der Erfindung zum Umschalten der Leistungsstellglieder Schalter vorgesehen sind. Diese können in einem einfachen Fall von Hand betätigbar sein, so daß die Druckmaschine oder eine andere vom Antriebsmotor angetriebene Maschine nach dem Feststellen des Ausfalles eines der Leistungsstellglieder innerhalb weniger Sekunden wieder betriebsbereit ist. Es ist auch möglich, steuerbare Schalter vorzusehen, die bei Ausfall eines der Leistungsstellglieder automatisch betätigt werden, so daß hier überhaupt keine Stillstandszeiten entstehen.

Die Art und Weise, wie der Ausfall eines der Leistungsstellglieder festgestellt und/oder angezeigt und/oder die soeben genannten automatischen Schalter in einem derartigen Fall betätigt werden, ist nicht Gegenstand der vorliegenden Erfindung.

Bei einer Ausführungsform der Erfindung ist eine zusätzliche Bremsmöglichkeit bei Ausfall des bestimmten Leistungsstellglieds vorgesehen. Der Vorteil liegt darin, daß der Motor und die mit ihm gekoppelte Druckmaschine beim Ausfall des bestimmten Leistungsstellglieds besonders rasch zum Stillstand gebracht werden können.

Die zusätzliche Bremsmöglichkeit kann in unterschiedlicher Weise verwirklicht sein. So ist bei einer Ausführungsform eine zusätzliche Bremse vorgesehen, und die Steuereinrichtung ist derart umschaltbar, daß sie mindestens bei Ausfall des bestimmten Leistungsstellgliedes beim Auftreten eines Zustandes, der das elektrische Abbremsen des Motors veranlaßt, ein Steuersignal erzeugt, um die Bremse zu betätigen.

Dabei wird die Steuerschaltung so umgeschaltet, daß anstatt der Ansteuersignale für das ursprünglich zum elektrischen Bremsen vorgesehene Leistungsstellglied nun Ansteuersignale für die zusätzlich vorhandene Bremse erzeugt werden und zu dieser erforderlichenfalls nach entsprechender Verstärkung, beispielsweise mittels eines Schützes, gelangen. Fällt bei dieser Ausführungsform das Leistungsstellglied für die andere Momenten-Richtung aus, das üblicherweise zum elektrischen Bremsen benötigt wird, so wird nur dieses Leistungsstellglied elektrisch abgetrennt und die Steuerschaltung, wie oben beschrieben, umgeschaltet, um die zusätzlich vorgesehene Bremse als Betriebsbremse zu benutzen.

Es wird hier beim Ausfall des bestimmten Leistungsstellglieds die zusätzlich vorgesehene Bremse zum Abbremsen des Motors herangezogen, die somit, solange eine Reparatur noch nicht erfolgt ist, als Betriebsbremse verwendet wird. Wenn die Steuerschaltung in einem einwandfreien Zustand ist, so wird dagegen die zusätzlich vorhandene Bremse für den Abbremsvorgang nicht benötigt und ist daher vor frühzeitigem Verschleiß geschützt. Die zusätzlich vorhandene Bremse kann dann als Sicherheitseinrichtung dienen, um beispielsweise während Wartungsarbeiten die Druckmaschine zu blockieren, so daß sie nicht in Bewegung gesetzt werden kann, selbst wenn der Antriebsmotor eingeschaltet wird. Die zusätzlich vorgesehene Bremse kann außerdem als Sicherheitseinrichtung bei einem Spannungsausfall des den Motor versorgenden elektrischen Netzes dienen. In diesem Falle kann die Bremse z.B. durch eine Feder in ihre Bremsstellung gebracht werden, wogegen sie bei vorhandener Netzspannung in der gelüfteten Stellung gehalten wird. Bei der zusätzlich vorgesehenen Bremse kann es sich z.B. um eine elektromechanische Bremse oder um eine hydraulich oder pneumatisch betätigte Bremse handeln, die jedoch in irgendeiner Weise elektrisch steuerbar sein muß.

Die oben beschriebene Umschaltung, die statt des elektrischen Bremsbetriebs die zusätzlich vorgesehene Bremse wirksam macht, kann sinngemäß auch bei weiteren Ausführungsformen der Erfindung angewendet werden, bei denen nämlich die zusätzliche Bremsmöglichkeit dadurch verwirklicht ist, daß die Erregung des Motors umsteuerbar ist, oder daß bei einer anderen Ausführungsform der Erfindung die Richtung des Ankerstroms umschaltbar ist.

Weitere Merkmale und Vorteile der Erfindung ergeben sich aus der nachfolgenden Beschreibung eines Ausführungsbeispieles der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen:

Fig. 1   ein   Blockschaltbild   eines Druckmaschinen-Hauptantriebs mit einem Ausführungsbeispiel einer Steuerschaltung,

Fig. 2   eine schematisierte Ansicht des Anschlusses von zwei Brückenschaltungen.

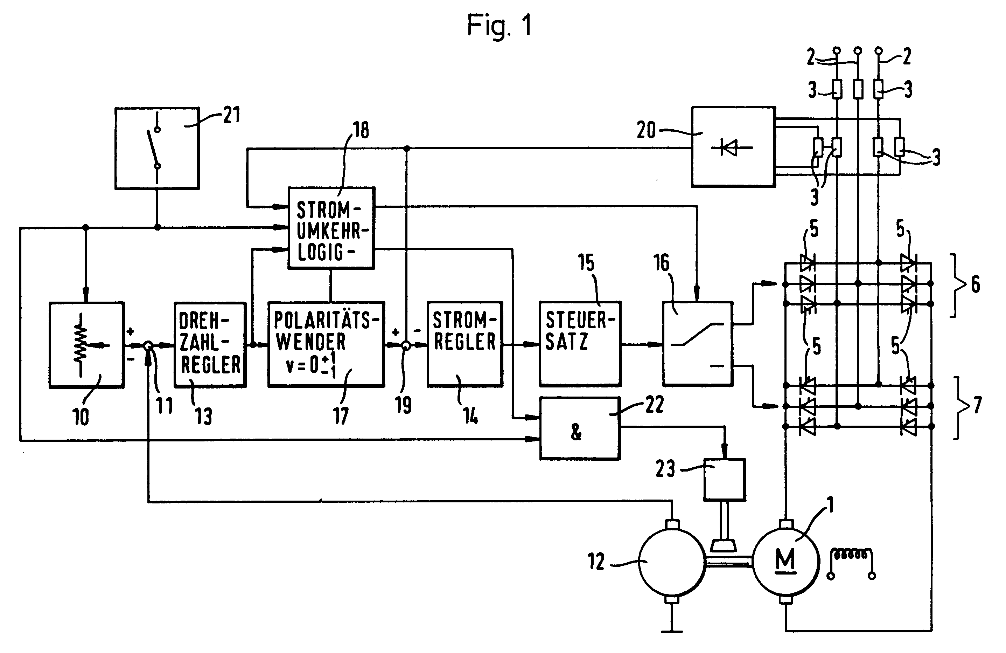

Fig. 1 zeigt schematisch die zum Betreiben eines Motors 1, der als Gleichstrom-Nebenschlußmotor ausgebildet ist, benötigte Steuerschaltung. Diese ist mit Anschlußleitungen 2 dreipolig an ein Drehstromnetz angeschlossen. In zwei der Anschlußleitungen 2 sind Stromwandler 3 eingeschaltet. Die Anschlußleitungen 2 führen zu einer ersten sechs Thyristoren 5 enthaltenden Brückenschaltung 6 und zu einer zweiten, antiparallel zur Brückenschaltung 6 geschalteten Brückenschaltung 7, die baugleich mit der Brückenschaltung 6 ist. Die Brückenschaltung 6 dient dazu, aus dem Wechselstrom Gleichstrom zu erzeugen, der den Motor 1 beim Vorwärtslauf speist, und die Brückenschaltung 7 dient dazu, den Motor 1 bei Rückwärtslauf zu speisen oder beim Vorwärtslauf des Motors im elektrischen Bremsbetrieb Energie aus dem Motor 1 ins Wechselstromnetz zurückzuspeisen. Die zu den Thyristoren führenden Steuerleitungen sind zur Zeichnungsvereinfachung nicht dargestellt.

Solange beide Brückenschaltungen 6 und 7 funktionsfähig sind, werden die Laufrichtung und die Solldrehzahl des Motors 1, der eine Offsetdruckmaschine antreibt, durch die Stellung eines Potentiometers 10 vorgegeben, dessen Abgriff einem Eingang einer Substraktionsschaltung 11 zugeführt wird, deren anderem Ein ang das Ausgangssignal eines mit dem Motor 1 verbundenen, eine der Drehzahl proportionale Span nung liefernden Drehzahlgebers, im Ausführungsbeispiel eines Tachogenerators, zugeführt wird. Das Ausgangssignal der Subtraktionsschaltung 11 wird zum Eingang eines Drehzahlreglers 13 geführt, der in Abhängigkeit davon, ob eine Abweichung der Drehzahl des Motors 1 von der durch die vom Potentiometer 10 vorgegebene Spannung bestimmten Drehrichtung und Drehzahl vorhanden ist, und ob die Motordrehzahl kleiner oder größer ist als die Solldrehzahl, einen Stromregler 14 ansteuert. Der Stromregler 14 steuert einen Steuersatz 15 an, der die phasenrichtigen Zündimpulse für die Thyristoren einer der Brückenschaltungen 6 oder 7 erzeugt, so daß die Beträge des Stromistwertes aus der Strommeßeinrichtung 20, 3 und des Stromsollwertes am Ausgang des Drehzahlreglers 13 am Vergleicher 19 gleich groß sind. Es ist jeweils nur eine der Brückenschaltungen 6 oder 7 in Betrieb, und die Stromumkehrlogik 18 sorgt mit Hilfe des Impulsumschalters 16 dafür, daß in Abhängigkeit von der Richtung der Ausgangsgröße des Drehzahlreglers 13 (Drehmomentrichtung) die vom Steuersatz 15 erzeugten Impulse jeweils der gewünschten Brückenschaltung 6 bzw. 7 zugeführt werden. Die Umschaltung erfolgt jeweils, nachdem der Stromfluß in der gerade aktiven Brückenschaltung beendet ist.

Da der Stromregler 14 nur den Betrag des Stromes bestimmt, sorgt der Polaritätswender 17 dafür, daß mit dem Umschalten der Zündimpulse auch die Polarität des Stromsollwertes vom Ausgang des Drehzahlreglers 13 umgeschaltet wird. Der bisher beschriebene Betrieb eines Gleichstrommotors mit zwei Drehstrombrücken ist bekannt.

Fällt die Brückenschaltung 6 infolge eines Kurzschlusses oder einer Unterbrechung eines der Halbleiter, nämlich der Thyristoren 5, aus, so wird die Brückenschaltung 6 aus der Schaltung getrennt und es wird die Brückenschaltung 7 so angeschlossen, wie die Brückenschaltung 6 angeschlossen ist. Die Brückenschaltung 7 dient dann zur Speisung des Motors 1 für den Vorwärtslauf. Zum Umschalten der Steuerschaltung ist ein Umschalter 21 vorgesehen, der ein Umschaltsignal an den Sollwertgeber 10 liefert, das diesen so beeinflußt, daß durch den Sollwertgeber 10 ein Rückwärtslauf des Motors 1 nicht mehr vorgegeben werden kann. Das Umschaltsignal des Umschalters 21 gelangt außerdem zu einem Eingang einer Ansteuerlogik 22 für eine elektromagnetische Bremse 23. Außerdem wird das Ausgangssignal des Umschalters einem weiteren Eingang der Stromumkehrlogik 18 zugeführt, und ein dritter Ausgang dieser Stromumkehrlogik ist mit dem anderen Eingang der Ansteuerlogik 22 verbunden.

Wird der Umschalter 21 betätigt, so hält die Stromumkehrlogik den Impulsumschalter 16 ständig einer solchen Stellung, daß er die für den Vorwärtslauf des Motors 1 benötigte Brückenschaltung ansteuert. Wird von dem Sollwertgeber 10 ein Ausgangssignal erzeugt, das für eine Drehzahl des Motors 1 charakteristisch ist, die um einen vorgegebenen Betrag unter dessen Istdrehzahl liegt, so veranlaßt die negative Ausgangsspannung des Drehzahlreglers 13, die der Stromumkehrlogik 18 zugeführt wird, daß ein Ausgangssignal an die Ansteuerlogik 22 abgegeben wird, das veranlaßt, daß die Bremse 23 den Motor 1 abbremst. Gleichzeitig wird durch die Stromumkehrlogik 18 der Polaritätswender 17 so beeinflußt, daß er dem Stromregler 14 ein solches Signal zuführt, das diesen veranlaßt, daß die Halbleiter der den Motor 1 versorgenden Brückenschaltung nicht mehr leitend gesteuert werden, so daß aus dem Drehstromnetz keine elektrische Leistung aufgenommen wird.

Die elektromechanische Bremse ist je nach Größe des zwei Werte annehmenden Ausgangssignales der Ansteuerlogik 22 entweder im gelüfteten (gelösten) Zustand oder im Bremszustand.

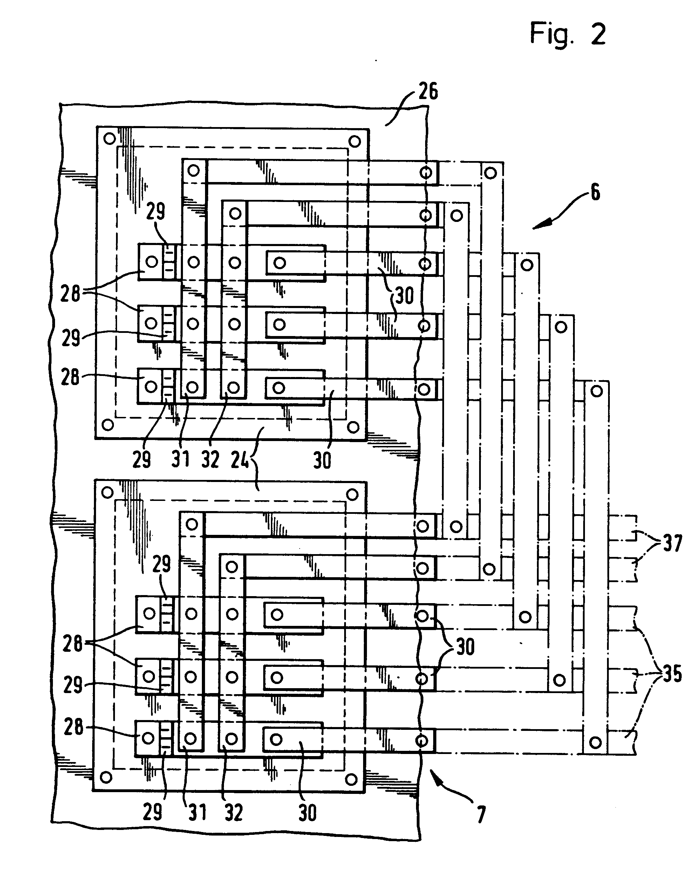

In Fig. 2 sind zwei Kühlkörper 24 im Abstand voneinander vorgesehen und an einem Träger 26 eines Schaltschrankes befestigt. An jedem Kühlkörper 24 sind drei Thyristormodule 28 befestigt, die jeweils zwei Gleichrichterstrecken bilden. Die Thyristormodule weisen jeweils zwei Steueranschlüsse 29, einen Wechselstromanschluß 30, der zu der Anode der einen Gleichrichterstrecke und zur Kathode der anderen Gleichrichterstrecke des Thyristormoduls führt, und zwei Gleichstromanschlüsse 31 und 32 auf, an denen die positive bzw. negative Gleichspannung für den Motor liegt. Die drei Thyristormodule 28 jedes Kühlkörpers 24 bilden eine insgesamt sechs Gleichrichterstrecken aufweisende Drehstrombrükkenschaltung. Die beiden Brückenschaltungen sind mittels durch Schraub-Klemmverbindungen befestigter Stromschienen miteinander in der geschilderten Weise verbunden, und Stromschienen 35 führen zum Wechselstromnetz, wogegen Stromschienen 37 zum Elektromotor 1 führen. Jede der beiden Brückenschaltungen kann durch Lösen der Schraub-Klemmvorrichtungen vollständig von den Schienen 35 und 37 abgetrennt werden. Wenn angenommen wird, daß die in Fig. 2 untere Brückenschaltung die Brückenschaltung 7 der Fig. 1 ist und wenn diese Brückenschaltung ausfällt, so kann nach dem vollständigen Trennen der Stromschienen 35 und 37 von dieser Brückenschaltung 7 die Brückenschaltung 8 einfach dadurch die Brückenschaltung 7 ersetzen, daß die Gleichstromanschlüsse bei der Brückenschaltung 8 vertauscht werden.

Die Kühlkörper 24 sind mittels Schrauben im Gestell 26 befestigt und können nach dem Lösen der Schrauben leicht herausgenommen werden.

Die Erfindung ist verwendbar für den Motor oder die Motoren für den Hauptantrieb einer Druckmaschine, aber auch für andere Motoren einer Druckmaschine, z.B. Stapelhubmotoren, die bei Bogendruckmaschinen den Stapel der zuzuführenden Papierbögen kontinuierlich oder schrittweise anheben oder absenken.

**Patentansprüche**

1. Steuerschaltung für einen elektrischen Druckmaschinenantriebsmotor (1) oder dergleichen, die ein erstes Halbleiter (5) enthaltendes Leistungsstellglied (6) für den Antrieb des Motors (1) in einer ersten Momentenrichtung und ein zweites Halbleiter (5) enthaltendes Leistungsstellglied (7) für den Antrieb des Motors (1) in der anderen Momentenrichtung aufweist, wobei die Leistungsstellglieder (6, 7) jeweils steuerbare Wechselstrom-Brückenschaltungen enthalten,
**dadurch gekennzeichnet,**
daß eine Trenneinrichtung vorgesehen ist, um mindestens bei Ausfall eines bestimmten Leistungsstellgliedes (6, 7) dieses von der übrigen Schaltung elektrisch abzutrennen und die übrige Schaltung statt dessen derart mit dem anderen Leistungsstellglied (7) zu verbinden, daß dieses an die Stelle des ausgefallenen Leistungsstellgliedes (6) tritt.

2. Steuerschaltung für einen elektrischen Druckmaschinenantriebsmotor (1) oder dergleichen, die ein erstes Halbleiter (5) enthaltendes Leistungsstellglied (6) für den Antrieb des Motors (1) in einer ersten Momentenrichtung und ein zweites Halbleiter (5) enthaltendes Leistungsstellglied (7) für den Antrieb des Motors (1) in der anderen Momentenrichtung aufweist, wobei die Leistungsstellglieder (6, 7) jeweils steuerbare Wechselstrom-Brückenschaltungen enthalten,
**dadurch gekennzeichnet,**
daß eine mechanische Trenneinrichtung vorgesehen ist, um mindestens bei Ausfall eines bestimmten Leistungsstellgliedes (6) dieses von der übrigen Schaltung elektrisch abzutrennen und die übrige Schaltung statt dessen derart mit dem anderen Leistungsstellglied (7) zu verbinden, daß dieses an die Stelle des ausgefallenen Leistungsstellglieds (6) tritt.

3. Steuerschaltung nach Anspruch 2,
   **dadurch gekennzeichnet,**
   daß zum elektrischen Abtrennen eines ausgefallenen Leistungsstellgliedes (6, 7) und zum Umschalten der Verbindung zwischen der Steuerschaltung und den Leistungsstellgliedern (6, 7) mechanische Schalter vorgesehen sind.

## Claims

1. Control circuit for an electric drive motor (1) of a printing machine or the like, said control circuit including a first semiconductor(5)-containing power control element (6) for driving said motor (1) in a first torque direction and a second semiconductor(5)-containing power control element (7) for driving said motor (1) in the other torque direction, each of said power control elements (6, 7) comprising a respective controllable alternating-current bridge circuit, characterized in that there is provided a separating means for electrically separating, at least upon failure of a respective power control element (6, 7), said respective power control element (6) from the remainder of the circuit and connecting the remainder of the circuit to the other power control element (7) instead such that said power control element (7) takes the place of the failed power control element (6).

2. Control circuit for an electric drive motor (1) of a printing machine or the like, said control circuit including a first semiconductor(5)-containing power control element (6) for driving said motor (1) in a first torque direction and a second semiconductor(5)-containing power control element (7) for driving said motor (1) in the other torque direction, each of said power control elements (6, 7) comprising a respective controllable alternating-current bridge circuit, characterized in that there is provided a mechanical separating means for electrically separating, at least upon failure of a respective power control element (6, 7), said respective power control element (6) from the remainder of the circuit and connecting the remainder of the circuit to the other power control element (7) instead such that said power control element (7) takes the place of the failed power control element (6).

3. Control circuit according to Claim 2,

characterized in that mechanical switches are provided for electrically isolating a failed power control element (6, 7) and for switching over the connections between the control circuit and the power control elements (6, 7).

## Revendications

1. Circuit de commande pour un moteur électrique (1) d'entraînement de presses à imprimer ou équivalents, qui comprend un organe de réglage de la puissance (6) comprenant un premier semiconducteur (5) pour l'entraînement du moteur (1) dans un premier sens de couple, et un deuxième organe de réglage de la puissance (7) comprenant un deuxième semiconducteur (5) pour l'entraînement du moteur (1) dans l'autre sens de couple, les organes de réglage de la puissance (6, 7) comprenant des circuits en pont à courant alternatif commandés,
   caractérisé
   en ce qu'il est prévu un dispositif de séparation pour, au moins dans le cas de défaillance d'un certain organe de réglage de la puissance (6, 7), séparer électriquement cet organe du reste du circuit et, en remplacement, connecter le reste du circuit à l'autre organe de réglage de la puissance (7), de telle manière que cet organe prenne la place de l'organe de réglage de la puissance (6) défaillant.

2. Circuit de commande pour un moteur électrique (1) d'entraînement de presses à imprimer, ou équivalents, qui comprend un premier organe (6) de réglage de la puissance comprenant un premier semiconducteur (5) pour l'entraînement du moteur (1) dans un premier sens de couple, et un deuxième organe (7) de réglage de la puissance comprenant un deuxième semiconducteur (5) pour l'entraînement du moteur (1) dans l'autre sens de coupe, les organes (6,7) de réglage de la puissance comprenant des circuits en pont à courant alternatif commandés,
   caractérisé
   en ce qu'il est prévu un dispositif de séparation mécanique pour, au moins dans le cas de défaillance d'un certain organe de réglage de la puissance (6, 7), séparer électriquement cet organe du reste du circuit et, en remplacement, connecter le reste du circuit à l'autre organe de réglage de la puissance (7), de telle manière que cet organe prenne la place de l'organe de réglage de la puissance (6) défaillant.

3. Circuit de commande selon la revendication 2, caractérisé

en ce que, pour séparer électriquement un organe de réglage de la puissance (6, 7) défaillant et pour inverser la liaison entre le circuit de commande et les organes de réglage de la puissance (6,7), il est prévu un inverseur mécanique.

Fig. 1

Fig. 2